Europäisches Patentamt

European Patent Office

Office européen des brevets

(11) Veröffentlichungsnummer: **0 124 079**
**A2**

## (12) EUROPÄISCHE PATENTANMELDUNG

(21) Anmeldenummer: **84104666.7**

(22) Anmeldetag: **26.04.84**

(51) Int. Cl.³: **C 09 K 5/04**

(30) Priorität: **29.04.83 DE 3315530**

(43) Veröffentlichungstag der Anmeldung: **07.11.84**
Patentblatt 84/45

(84) Benannte Vertragsstaaten: **AT BE CH DE FR GB IT LI LU NL SE**

(71) Anmelder: **Ruhrgas Aktiengesellschaft,
Huttropstrasse 60 Postfach 10 32 52,
D-4300 Essen 1 (DE)**

(72) Erfinder: **Mühlmann, Heinrich, Dr. rer.nat..Dipl.-Chem.,
Bonifatiusstrasse 44a, D-4270 Dorsten (DE)**
Erfinder: **Gerritzen, Heinz-Günter, Dr.-Ing.,
Debbingstrasse 14, D-4270 Dorsten-Rhade (DE)**
Erfinder: **Bokelmann, Horst, Dipl.-Ing., Neckarstrasse 15,
D-4300 Essen 18 (DE)**
Erfinder: **Renz, Manfred, Dr. Ing., c/o Rotachheim,
Gartenstrasse 7, D-7983 Wilhelmsdorf (DE)**

(74) Vertreter: **Zenz, Joachim Klaus et al, Am Ruhrstein 1,
D-4300 Essen 1 (DE)**

(54) **Lösungsmittel und Stoffpaar für Sorptions-Heiz- oder -Kühlprozesse.**

(57) Ein Stoffpaar, enthaltend NPM (N-Methylpyrrolidon) als Lösungsmittel und außerdem ein Kältemittel aus TFE (Trifluoräthanol), wird verwendet für Sorptions-Heizprozesse oder -Kühlprozesse.

EP 0 124 079 A2

Lösungsmittel und Stoffpaar für Sorptions-Heiz- oder
-Kühlprozesse

Die Erfindung betrifft ein Lösungsmittel und ein Stoffpaar
für Sorptions-Heiz- oder -Kühlprozesse.

Üblicherweise wird für derartige Prozesse als Stoffpaar
Ammoniak/Wasser verwendet. Dieses Stoffpaar hat vor allen
Dingen den Nachteil, daß Ammoniak giftig ist. Die Gefahr
von Umweltbeeinträchtigungen kann also nicht ausgeschlossen
werden. Hinzu kommt, daß mit relativ hohen Drücken gearbeitet werden muß. Dadurch steigern sich die Gefahren. Außerdem erhöht sich der vorrichtungstechnische Aufwand, und es
entfällt die Möglichkeit für eine mehrstufige Arbeitsweise.

Bekannt ist ferner das Stoffpaar Wasser/Lithiumbromid bei
dem allerdings die Gefahr einer Kristallisation aus dem
Lösungsmittel heraus besteht. Auch muß die Wärmequellentemperatur relativ hoch liegen, nämlich über 0 °C.

Der Erfindung liegt die Aufgabe zu Grunde, unter Vermeidung
der erwähnten Nachteile eine verbesserte Basis für Sorptions-Heiz- oder -Kühlprozesse zu schaffen.

Kern der Erfindung ist die Verwendung von NMP (N-Methylpyrrolidon   als Lösungsmittel eines außerdem ein Kältemittel umfassenden Stoffpaares für Sorptions-Heiz- oder
-Kühlprozesse.

Dieses Lösungsmittel ist nicht giftig oder umweltschädlich, und es besteht keine Gefahr einer Auskristallisation.
Außerdem ist NMP thermisch stabil und nicht korrosiv.
Schließlich sei erwähnt, daß es sich bei NMP um ein industriell verfügbares Massenprodukt mit entsprechend niedrigem Preis handelt.

- 2 -                                    0124079

NMP hat die Formel $C_5H_9ON$.

Die Erfindung richtet sich ferner auf ein Stoffpaar unter Verwendung von NMP, das dadurch gekennzeichnet ist, daß als Kältemittel fluorisierte Kohlenwasserstoffe verwendet werden.

Diese Stoffpaare arbeiten bei extrem niedrigen Drücken, so daß der apparatetechnische Aufwand (Gewicht, Leistung der mechanischen Pumpe) gering bleibt. Auch muß der Aufstellungsort keinen besonderen Anforderungen genügen. Ferner ist eine mehrstufige Arbeitsweise ohne weiteres möglich. Schließlich ist die Umweltfreundlichkeit dieser Stoffpaare hervorzuheben.

Vorzugsweise wird als Kältemittel TFE (1.1.1-Trifluoräthanol) verwendet. Thermodynamisch betrachtet, liefert dieses Stoffpaar Werte, die mit denen von Ammoniak/Wasser vergleichbar sind. Der Siedepunktabstand ist gleich, und die Dampfdruckkurven haben einen ähnlich flachen Verlauf. Die Arbeitsdrücke liegen sogar unter 1 at.

TFE hat die Formel $C_2H_3OF_3$.

Aus dem beiliegenden Diagramm und der beiliegenden Tabelle ergibt sich eine Gegenüberstellung der Stoffpaare $NH_3/H_2O$ und TFE/NMP.

| Stoffspez. Daten \ Stoffpaare | | NH$_3$/H$_2$O | | TFE/NMP | |
|---|---|---|---|---|---|
| | | NH$_3$ | H$_2$O | TFE | NMP |
| Molekulargewicht | g/Mol | 17 | 18 | 100 | 99 |
| Siedepunkt (1,013 bar) | °C | -33,3[1] | 100 | 73,6 | 206 |
| Siedepunktsabstand | K | 133,4 | | 132,4 | |
| Spez. Verdampfungsenthalpie | kJ/kg | 1368,1[1] (-33,3°C) | — | 408 (45°C) | — |
| Spez. Lösungswärme | kJ/kg | 518,5 | — | 56,2 | — |
| Hochdruck (45°C) | bar | 17,8[1] | — | 0,27 | — |
| Niederdruck (-5°C) | bar | 3,55[1] | — | 0,015 | — |

[1] R. Döring , Klima+Kälteingenieur Extra 5

0124079

Arbeitsprozeß – Vergleich: $NH_3/H_2O$ – TFE/NMP

0124079

RUHRGAS AKTIENGESELLSCHAFT

   ESSEN


Patentansprüche


1. Verwendung von NMP (N-Methylpyrrolidon) als Lösungsmittel eines außerdem ein Kältemittel umfassenden Stoffpaares für Sorptions-Heiz- oder -Kühlprozesse.


2. Stoffpaar nach Anspruch 1, dadurch gekennzeichnet, daß als Kältemittel fluorierte Kohlenwasserstoffe verwendet werden.


3. Stoffpaar nach Anspruch 2, dadurch gekennzeichnet, daß als Kältemittel TFE (1.1.1-Trifluoräthanol) verwendet wird.